# EUROPEAN PATENT SPECIFICATION

(11) **EP 3 290 369 B1**
(45) Date of publication and mention of the grant of the patent: **01.05.2019**
(21) Application number: 17189035.3
(22) Date of filing: 01.09.2017
(51) Int. Cl.: B65H 49/26, A01F 15/07, B65H 49/32

(54) **ROLL STAND**
ROLLENTRÄGER
DÉVIDOIR DE BOBINE

(30) Priority: 05.09.2016 FI 20165656
(43) Date of publication of application: 07.03.2018
(73) Proprietor: Agronic Oy, 86600 Haapavesi (FI)
(72) Inventor: Kuronen, Urpo, 86600 Haapavesi (FI)
(74) Representative: Berggren Oy, Helsinki & Oulu

(56) References cited:
- JP-U- S5 036 743
- JP-U- S60 120 698
- KR-B1- 101 198 009
- US-A- 4 662 151

## Description

The invention relates to a roll stand, which has a support element for supporting and/or attaching to the structure, a base, which base is attached to the support element rotatably with a mounting shaft, which base has at least one roll support and which base is adapted to rotate about the mounting shaft to an operating position, in which the roll support/roll supports are at a first angle in relation to the support element, and to a service position, in which the roll support/roll supports are at a second angle in relation to the support element, the first and second angle being unequal and the roll stand has locking means to prevent the rotation of the base.

In the manufacturing phase, film-type material is often wrapped around a cylindrical core to form a film roll. Film rolls formed around the core are often stored in roll stands, which have pins for supporting the rolls. The rolls are mounted into the roll stands in a vertical position so that the pins settle inside the hollow cores of the rolls, thus preventing the rolls from overturning. The pins are placed onto a rotatable base, which makes it possible to tilt the pins from a vertical position close to a horizontal position. The tilting option of the pins facilitates the removal of empty cores from the pins and the mounting of full rolls to the pins especially when the roll stand is located higher than the user's working station and/or when the pins are relatively long. Roll stands like the ones described above are, for example, found in combined machines used for the baling of hay and feed plants, in which protective film rolls needed in the wrapping of bales, transportable with the machine are stored.

Several problems are related to known roll stands. Especially in roll stands used in moving working machines, it must be possible to lock the base to an operating position, in which the pins are in substantially vertical position so that they cannot overturn when moving on an uneven ground. In addition, it would be good to be able to lock the base also to an inclined service position so that the pins would remain immovably in place during the mounting of new rolls. In known roll stands the locking of the base to the operating position is managed by a latch mechanism, which is complex and difficult to use.

It is an object of the invention to introduce a roll stand, with which known problems relating to the technique can be eliminated. The objects of the invention are achieved with a roll stand, which is characterized in what is presented in the independent patent claims. Some advantageous embodiments of the invention are illustrated in the dependent patent claims.

Documents KR 101198009 B1 and JP S5036743 U disclose a roll stand according to the preamble of claim 1. Document US 4662151 A discloses a machine for wrapping rolled bales with plastic sheet.

The object of the invention is a roll stand, which has a support element for supporting and/or attaching to the structure, and a base, which is attached to the support element rotatably with a mounting shaft. The base has at least one roll support and it is adapted to rotate about the mounting shaft to an operating position, in which the roll support/roll supports are at a first angle in relation to the support element, and to a service position, in which the roll support/roll supports are at a second angle in relation to the support element. The first and second angle are unequal. The roll stand has locking means to prevent the base from rotating. The locking means comprise a first support surface and a movable lock element. The lock element is transferable to a first location, in which the lock element is in contact with the first support surface, when the base is in the operating position, and to a second location, in which the lock element is at a distance from the first location, when the base is in the operating position. The second location is at a distance from the first location. When the lock element is in the first location, the lock element prevents the base from rotating about the mounting shaft from the operating position to the first direction of rotation. Respectively, when the lock element is in the second location, it does not prevent the base from rotating about the mounting shaft. It is appropriate to support or attach the roll stand in place so that as the base is in the operating position, the rolls arranged to the roll stands are in a substantially vertical position.

In an advantageous embodiment of the roll stand of the invention said locking elements further comprise a second support surface, which is at a distance from the first support surface. The lock element is in contact with the second support surface, when the base is in the service position and the lock element is in the second location. The base transfers from the operating position to the service position by rotating about the mounting shaft in the first direction of rotation. The locking element in the second position functions as a retainer, which sets an upper limit for the rotation of the base; in other words, it prevents the base from rotating too much in the first direction of rotation. It is appropriate to support or attach the roll stand in place so that, as the base is in the service position, the roll stands are in a position, which is distinctly inclined from the vertical position. In the service position, the removal of empty roll cores and the mounting of full rolls to the roll supports is easily achievable.

In a second advantageous embodiment of the roll stand of the invention the said locking means comprise a groove, in which the lock element is arranged to move, the first location being at the first end of the groove and the second location at the second end of the groove. The groove is preferably U-shaped, and the ends of the groove are directed to extend away from the base. At the first end of the groove there can be an extension for receiving the lock element. It is appropriate to form the extension to the groove so that the support surface guides the lock element towards the extension, when the base is in the operating position. Thanks to the extension, the lock element stays better in place at the first end of the groove and does not easily start to move in the groove towards the second end of the groove.

In a third advantageous embodiment of the roll stand of the invention the groove is arranged into the base, and the first and second support surface are arranged into the support element. The first support surface is preferably at the end surface of the support element and the second support surface is at the lower surface of the support element, the end surface and lower surface being at an angle, preferably at a substantially right angle in relation to each other.

Alternatively, the groove can be arranged into the support element, and the first support surface and the second surface are arranged into the base. In this case, the base preferably has a side edge, into which the first support surface is arranged, and an end edge, into which the second support surface is arranged, the side edge and end edge being at an angle, preferably at a substantially right angle in relation to each other.

In yet another advantageous embodiment of the roll stand of the invention there is provided a retainer to prevent the base from rotating from the operating position into the second direction of rotation. In the operating position, the base has rotated to its extreme position in the second direction of rotation, against the retainer. By placing the lock element to the first location, the rotation of the base from the operating position into the first direction of rotation is prevented so that the base is unrotatably locked in place in the support element.

In yet another advantageous embodiment of the roll stand of the invention the roll stands are pins to be fitted inside the core of the roll. It is appropriate to support and attach the roll support in place so that the pins are substantially vertical when the base is in the operating position.

In yet another advantageous embodiment of the roll stand of the invention the lock element is arranged to set gravitationally to a first location, when the base is in the operating position and the roll stands are in a substantially vertical position.

It is an advantage of the invention that the base of the roll stand can be locked, and the locking can be released easily and fast. The locking of the base can be guided with one hand while simultaneously adjusting the position of the base with the other hand. Thus, the invention speeds up the replacement work of rolls to be mounted onto the base.

In addition, it is an advantage of the invention that it is structurally simple and operationally secure.

The invention is next explained in detail, referring to the attached drawings in which:
Figures 1a and 1c illustrate in an exemplary manner a roll stand of the invention seen from the side;
Figure 1b illustrates the roll stand shown in Figures 1a and 1c seen from the top; and
Figures 2a and 2b illustrate in an exemplary manner an advantageous embodiment of the roll stand of the invention seen from the side.

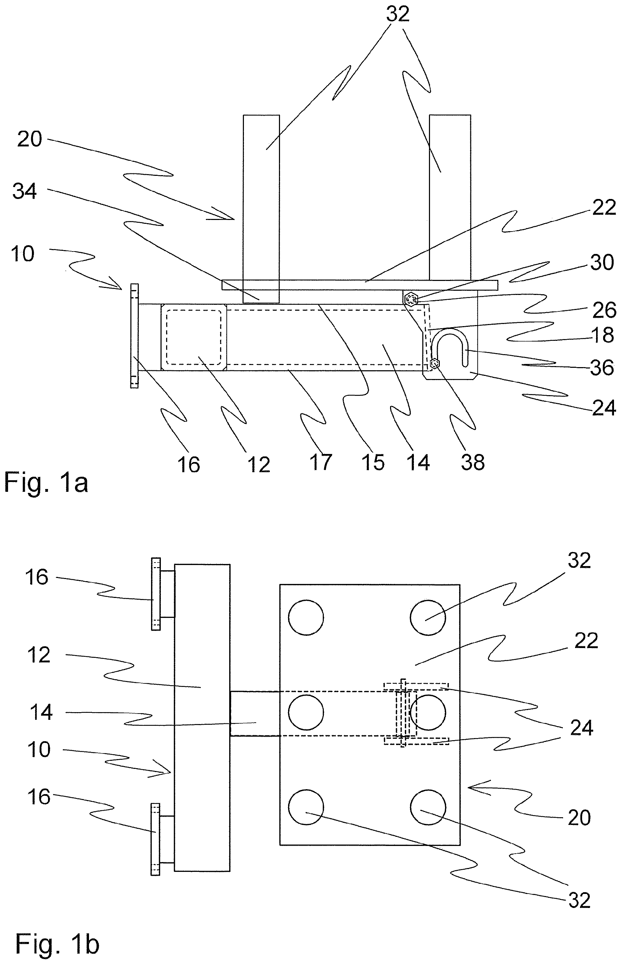

In Figure 1a there is shown in an exemplary manner a roll stand of the invention, seen from the side, and in Figure 1b, the same roll stand is seen from the top. In the following, both figures are explained simultaneously.

The roll stand has the support element 10, which comprises a longitudinal stub element 12 and shank element 14, attached to the side of the stub element. The stub element and shank element are made of a metallic hollow pipe profile with a quadratic cross-section. At both ends of the stub element there is a short projection with an attachment plate 16 at its end. The attachment plate has fastening holes for the penetration of fastening screws. The shank element is attached from its first end to the side of the stub element substantially half-way of the length of the stub element so that the shank element and stub element are set at a substantially right angle. The end surface of the second end of the shank element is cut to an angle deviating slightly from the right angle in relation to the longitudinal direction of the shank element so that the lower surface 17 of the shank element is slightly longer than the upper surface 15 of the shank element. At the second end of the shank element there is an end plate 18. Due to the position of the end surface, the end plate and the lower surface of the shank element form an acute angle, which is slightly smaller than the right angle. Respectively, the upper surface of the shank element and the end plate form an obtuse angle, which is slightly bigger than the right angle. The surface of the end plate remaining visible forms the end surface for the support element.

Above the shank element there is the base 20, which is attached rotatably to the shank element by means of the mounting shaft 30. The base comprises the bottom plate 22, on the first surface of which there are two parallel plate-type attachment lugs 24 at a distance from each other. The base is placed in relation to the shank element so that the second end of the shank element is located between the attachment lugs. On the upper surface of the shank element, at the second end of the shank element, there is a tubular sleeve 26, the open ends of which point towards the attachment lugs. The attachment lugs have holes by the open ends of the sleeve. The base is attached to the one end of the shank with the mounting shaft 30, which travels through the holes of the attachment lugs and the sleeve. The attachment carried out with the mounting shaft is a hinge attachment, which makes it possible for the base to rotate about the mounting shaft.

Both attachment lugs 24 have a through-going groove 36 in the shape of an inverted U, with a first end and second end. The first end of the groove is located beside the end plate 18 of the shank element 14 close to the lower surface 17 of the shank element. The second end of the groove is located at a distance from the end plate. A lock element 38 in the shape of a rod is fitted into the grooves, the first end of the lock element extending to the first side of the first attachment lug and the second end extending to the second side of the second attachment lug. At the ends of the lock element there are nuts bigger than the width of the groove, which prevent the lock element from leaving the grooves 36. The width of the groove is dimensioned so that the lock element can be moved in the grooves from the first end of the groove to the second end of the groove. In Figure 1a the lock element is at the first end of the groove, which is in this presentation called the first location. The lock element in the first location is placed in contact with the lower edge of the end plate from its wall surface. The part of the end plate coming into contact with the lock element is in this presentation called the first support surface. The lock element in the first location prevents the base from rotating about the mounting shaft into the first direction of rotation (clockwise in Figure 1a). At the first end of the groove there is a small extension, a few millimeters wide, which extends towards the second end of the groove. When power rotating into the first direction of rotation is targeted at the base, the lock element is pressed into the extension because of the power directed by the end plate. In this way, the extension prevents the lock element from rising upwards in the groove.

On the second surface of the base there are six roll supports 32 in the form of pins. The roll supports are arranged in two rows so that the first row, closer to the stub element 12, has three roll supports and the second row, farther away from the stub element has likewise three roll supports. The roll supports are attached from their first ends to the bottom plate 22 so that they are in a substantially perpendicular position in relation to the bottom plate. The first end of the middlemost roll support of the first row extends through the bottom plate so that its end is placed against the upper surface 15 of the shank element 14, when the base is in the position according to Figure 1a. The through-going end of the roll support forms the retainer 34, which prevents the base 20 from rotating farther about the mounting shaft in the second direction of rotation. In Figure 1a, the base is in the operating position, in which the roll supports on the base form a first angle with the support element. In the operating position, the lock element 38 in the first location prevents the base from rotating in the first direction of rotation (clockwise in Figure 1a) and the retainer 34 prevents the base from rotating into the second direction of rotation (anticlockwise in Figure 1b) so that the base is supported unrotatably to the support element.

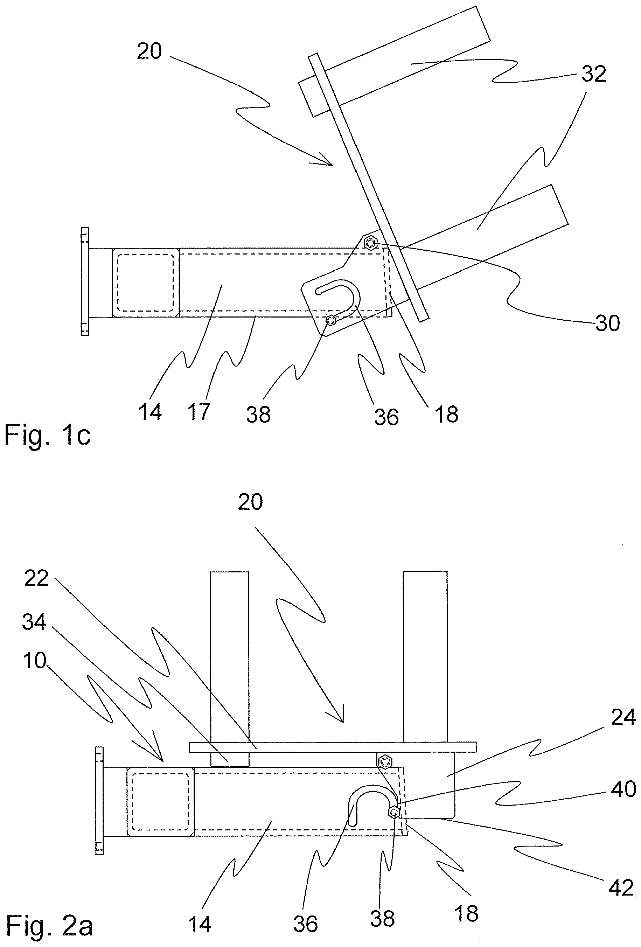

In Figure 1c there is illustrated the roll stand of Figure 1a seen from the side, when the base 20 has been rotated to the service position. For rotating to the service position, the lock element 38 is transferred manually to the second location at the second end of the groove 36. The second location is at a distance from the end plate 18 so that the lock element no longer is in contact with the end plate. The base can then be rotated manually to the service position according to Figure 1c, in which the roll supports 32 are distinctly in an inclined position. The base transfers to the service position by rotating about the mounting shaft 30 in the first direction of rotation. The base can rotate in the first direction of rotation so long that the wall surface of the lock element in the second location meets the lower surface 17 of the shank element 14. The lock element in the second location thus functions as a retainer, which defines the upper limit for the rotation of the base in the first direction of rotation. The point of the shank element, which is placed in contact with the wall surface of the lock element in the second location, is in this presentation called the second support surface.

The base 20 is placed into the service position when empty cores are removed from the roll supports 32 and they are replaced by full rolls. Tilting the roll supports makes the replacement of rolls clearly easier especially when the roll stand is located higher than the plane of the user, because the roll stands are long and the replacing full rolls are heavy. The locking means can be dimensioned so that in the service position the roll supports are in a position turning slightly upwards from the horizontal plane. After the replacement of the rolls, the base is rotated back to the operating position according to Figure 1a by rotating the base about the mounting shaft 30, and the base is locked to be unrotatable by transferring the lock element 38 to the first location in the groove 36.

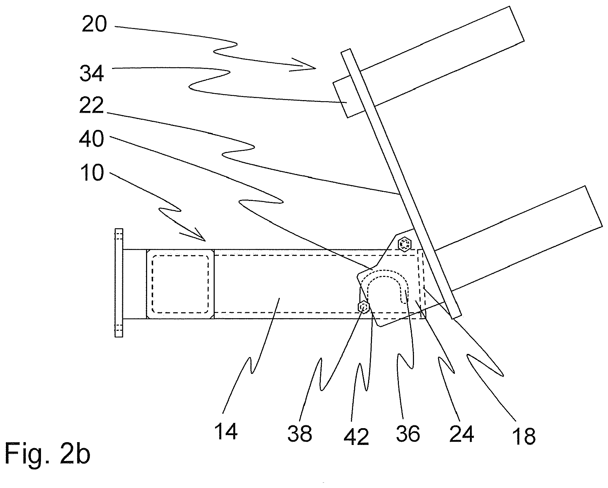

In Figures 2a and 2b there is shown in an exemplary manner an advantageous embodiment of the roll stand of the invention seen from the side. In the following, both figures are explained simultaneously. The embodiment illustrated in the figures contains the same structural elements as the invention illustrated in Figures 1a, 1b and 1c, and the same names and reference numbers are used of them in the specification. The embodiment in Figures 2a and 2b differs from the invention in Figures 1a-1c in that the grooves 36 belonging to the locking means have been formed to the side walls of the shank element 14 close to the second end of the shank element. The lock element 38 in the shape of a rod is fitted into the grooves in the manner explained in Figures 1a and 1b. The first location of the lock element is at the end of the groove closer to the end plate 18, and the second location of the lock element is at the end of the groove farthest away from the end plate. The attachment lugs 24 in the first surface of the bottom plate 22 have a side edge 40, in which there is the first support surface, and an end edge 42 substantially parallel to the bottom plate, the end edge having the second support surface.

In Figure 2a, the base 20 is in the operating position and the base is locked unrotatably to the support element 10 by transferring the lock element to the first location so that the wall surface of the lock element is placed in contact with the first support surfaces in the side edges of the lugs 24. This prevents the base from rotating about the mounting shaft 30 in the first direction of rotation. Because the retainer 34 prevents the base from rotating about the mounting shaft 30 in the second direction of rotation, the base is thus locked unrotatably to the support element 10. When the lock element is transferred to the second location along the groove 36, the base can be rotated manually about the mounting shaft to the service position according to Figure 2b. In the service position, the wall surface of the lock element is placed against the second support surfaces at the end edge 42 of the attachment lugs, thus setting an upper limit for the rotation of the base in the first direction of rotation. The embodiment described in Figures 2a and 2b thus functions in the similar manner as the invention illustrated in Figure 1a-1c.

Above there have been explained some advantageous embodiments of the roll stand of the invention. The invention is not limited to the solutions explained above, but the inventional idea can be applied in different ways within the limits set by the patent claims.

## Claims

1. Roll stand, which has a support element (10) for supporting and/or attaching to the structure, a base (20), which base (20) is attached rotatably to the support element (10) with a mounting shaft (30), which base (20) has at least one roll support (32) and which base (20) is adapted to rotate about the mounting shaft (30) to an operating position, in which the roll support/roll supports (32) are at a first angle in relation to the support element (10), and to a service position, in which the roll support/roll supports (32) are at a second angle in relation to the support element (10), which first and second angles are unequal and which roll stand has locking means to prevent the rotation of the base (20), which locking means comprise a first support surface and a movable lock element (38), the lock element (38) being movable to a first location, in which the lock element is in contact with the first support surface, when the base (20) is in the operating position, and to a second location, in which the lock element (38) is at a distance from the first support surface, when the base is in the operating position, the second location being at a distance from the first location, **characterized in that** the said locking means further comprise a second support surface, which second support surface is at a distance from the first support surface and the lock element (38) is in contact with the second support surface when the base (20) is in the service position and the lock element (38) is in the second location.

2. Roll stand according to claim 1, **characterized in that** the said locking means comprise a groove (36), in which the lock element (38) is arranged to move and the first location is at the first end of the groove (36) and the second location is at the second end of the groove (36).

3. Roll stand according to claim 2, **characterized in that** the groove (36) is substantially U-shaped and the ends of the groove (36) are directed to extend away from the base.

4. Roll stand according to claim 2 or 3, **characterized in that** at the first end of the said groove (36) there is an extension for receiving the lock element (38).

5. Roll stand according to any of the claims 2-4, **characterized in that** the said groove (36) is arranged into the base (20) and the first support surface and the second support surface are arranged into the support element (10).

6. Roll stand according to claim 5, **characterized in that** the first support surface is in the end surface of the support element (10) and the second support surface is in the lower surface (17) of the support element (10), the end surface and lower surface (17) being at an angle, preferably at a substantially right angle in relation to each other.

7. Roll stand according to any of the claims 2-4, **characterized in that** the said groove (30) is arranged into the support element (10) and the first support surface and the second support surface are arranged into the base (20).

8. Roll stand according to claim 7, **characterized in that** the base (20) has a side edge (40), into which the first support surface is arranged, and an end edge (42), into which the second support surface is arranged, the side edge (40) and the end edge (42) being at an angle, preferably at a substantially right angle in relation to each other.

9. Roll stand according to any of the claims 1-8, **characterized in that** the stand has a retainer (34) for preventing the base (20) from rotating from the operating position in the second direction of rotation.

10. Roll stand according to any of the claims 1-9, **characterized in that** the roll supports (32) are pins, which can be fitted inside the core of the roll.

11. Roll stand according to any of the claims 1-10, **characterized in that** the lock element (38) is arranged to settle gravitationally into the first location when the base (20) is in the operating position and the roll supports (32) are in a substantially vertical position.

## Patentansprüche

1. Rollenträger, der ein Halteelement (10) zum Halten der Struktur und/oder Anbringen an derselben und eine Basis (20) aufweist, wobei die Basis (20) auf drehbare Weise mit einer Befestigungswelle (30) an dem Halteelement (10) angebracht ist, wobei die Basis (20) wenigstens eine Rollenhalterung (32) aufweist und wobei die Basis (20) geeignet ist, sich um die Befestigungswelle (30) in eine Betriebsstellung, in der sich die Rollenhalterung/die Rollenhalterungen (32) in einem ersten Winkel in Bezug auf das Halteelement (10) befinden, und in eine Dienststellung, in der sich die Rollenhalterung/die Rollenhalterungen (32) in einem zweiten Winkel in Bezug auf das Halteelement (10) befinden, zu drehen, wobei der erste und der zweite Winkel nicht gleich sind und wobei der Rollenträger Verriegelungsmittel aufweist, um die Drehung der Basis (20) zu verhindern, wobei die Verriegelungsmittel eine erste Haltefläche und ein bewegliches Sperrelement (38) umfassen, wobei das Sperrelement (38) an eine erste Stelle, an der das Sperrelement in Kontakt mit der ersten Haltefläche steht, wenn sich die Basis (20) in der Betriebsstellung befindet, und an eine zweite Stelle, an der das Sperrelement (38) von der ersten Haltefläche beabstandet ist, wenn sich die Basis in der Betriebsstellung befindet, bewegbar ist, wobei die zweite Stelle von der ersten Stelle beabstandet ist, **dadurch gekennzeichnet, dass** die Verriegelungsmittel ferner eine zweite Haltefläche umfassen, wobei die zweite Haltefläche von der ersten Haltefläche beabstandet ist und das Sperrelement (38) in Kontakt mit der zweiten Haltefläche steht, wenn sich die Basis (20) in der Dienststellung befindet und sich das Sperrelement (38) an der zweiten Stelle befindet.

2. Rollenträger nach Anspruch 1, **dadurch gekennzeichnet, dass** die Verriegelungsmittel eine Nut (36) umfassen, in der das Sperrelement (38) so angeordnet ist, dass es sich bewegt, und sich die erste Stelle an dem ersten Ende der Nut (36) befindet und sich die zweite Stelle an dem zweiten Ende der Nut (36) befindet.

3. Rollenträger nach Anspruch 2, **dadurch gekennzeichnet, dass** die Nut (36) im Wesentlichen U-förmig ist und die Enden der Nut (36) so ausgerichtet sind, dass sie sich weg von der Basis erstrecken.

4. Rollenträger nach Anspruch 2 oder 3, **dadurch gekennzeichnet, dass** sich an dem ersten Ende der Nut (36) eine Verlängerung befindet, um das Sperrelement (38) aufzunehmen.

5. Rollenträger nach einem der Ansprüche 2 bis 4, **dadurch gekennzeichnet, dass** die Nut (36) in der Basis (20) angeordnet ist und die erste Haltefläche und die zweite Haltefläche in dem Halteelement (10) angeordnet sind.

6. Rollenträger nach Anspruch 5, **dadurch gekennzeichnet, dass** sich die erste Haltefläche in der Endfläche des Halteelements (10) befindet und sich die zweite Haltefläche in der unteren Fläche (17) des Halteelements (10) befindet, wobei die Endfläche und die untere Fläche (17) in einem Winkel, vorzugsweise in einem im Wesentlichen rechten Winkel, in Bezug zueinander stehen.

7. Rollenträger nach einem der Ansprüche 2 bis 4, **dadurch gekennzeichnet, dass** die Nut (30) in dem Halteelement (10) angeordnet ist und die erste Haltefläche und die zweite Haltefläche in der Basis (20) angeordnet sind.

8. Rollenträger nach Anspruch 7, **dadurch gekennzeichnet, dass** die Basis (20) eine Seitenkante (40), in der die erste Haltefläche angeordnet ist, und eine Endkante (42), in der die zweite Haltefläche angeordnet ist, aufweist, wobei sich die Seitenkante (40) und die Endkante (42) in einem Winkel, vorzugsweise in einem im rechten Winkel, in Bezug zueinander befinden.

9. Rollenträger nach einem der Ansprüche 1 bis 8, **dadurch gekennzeichnet, dass** der Träger eine Haltevorrichtung (34) aufweist, um zu verhindern, dass sich die Basis (20) in der zweiten Drehrichtung aus der Betriebsstellung dreht.

10. Rollenträger nach einem der Ansprüche 1 bis 9, **dadurch gekennzeichnet, dass** die Rollenhalterungen (32) Stifte sind, die in den Kern der Rolle einsetzt werden können.

11. Rollenträger nach einem der Ansprüche 1 bis 10, **dadurch gekennzeichnet, dass** das Sperrelement (38) so angeordnet ist, dass es sich gravitationsbedingt in die erste Stelle absetzt, wenn sich die Basis (20) in der Betriebsstellung befindet und sich die Rollenhalterungen (32) in einer im Wesentlichen vertikalen Stellung befinden.

## Revendications

1. Dévidoir de bobine, comprenant un élément de support (10) pour supporter et/ou à attacher à la structure, une base (20), ladite base (20) étant attachée de façon rotative à l'élément de support (10) à l'aide d'un arbre de montage (30), ladite base (20) présentant au moins un support de bobine (32) et ladite base (20) étant adaptée pour tourner autour de l'arbre de montage (30) dans une position opérationnelle, dans laquelle le(s) support(s) de bobine (32) est (sont) situé(s) à un premier angle par rapport à l'élément de support (10), et dans une position de service, dans laquelle le(s) support(s) de bobine (32) est (sont) situé(s) à un second angle par rapport à l'élément de support (10), lesdits premier et second angles étant inégaux et ledit dévidoir de bobine présentant des moyens de verrouillage pour empêcher la rotation de la base (20), **caractérisé en ce que** lesdits moyens de verrouillage présentent une première surface de support et un élément de verrou mobile (38), l'élément de verrou (38) étant déplaçable dans un premier endroit, dans lequel l'élément de verrou est en contact avec la première surface de support, lorsque la base (20) se trouve dans la position opérationnelle, et dans un second endroit, dans lequel l'élément de verrou (38) est situé à une certaine distance de la première surface de support, lorsque la base se trouve dans la position opérationnelle, le second endroit étant situé à une certaine distance du premier endroit, **caractérisé en ce que** lesdits moyens de verrouillage présentent en outre une seconde surface de support, ladite seconde surface de support étant située à une certaine distance de la première surface de support et l'élément de verrou (38) étant en contact avec la seconde surface de support lorsque la base (20) se trouve dans la position de service et que l'élément de verrou (38) est situé dans le second endroit.

2. Dévidoir de bobine selon la revendication 1, **caractérisé en ce que** lesdits moyens de verrouillage comprennent une rainure (36), dans laquelle l'élément de verrou (38) est agencé pour se déplacer, et le premier endroit est situé à la première extrémité de la rainure (36) et le second endroit est situé à la seconde extrémité de la rainure (36).

3. Dévidoir de bobine selon la revendication 2, **caractérisé en ce que** la rainure (36) est sensiblement en forme de U et les extrémités de la rainure (36) sont orientées de manière à s'étendre à l'écart de la base.

4. Dévidoir de bobine selon la revendication 2 ou 3, **caractérisé en ce qu'**une extension est prévue à la première extrémité de ladite rainure (36) afin de recevoir l'élément de verrou (38).

5. Dévidoir de bobine selon l'une quelconque des revendications 2 à 4, **caractérisé en ce que** ladite rainure (36) est agencée dans la base (20) et la première surface de support et la seconde surface de support sont agencées dans l'élément de support (10).

6. Dévidoir de bobine selon la revendication 5, **caractérisé en ce que** la première surface de support est située dans la surface d'extrémité de l'élément de support (10) et la seconde surface de support est située dans la surface inférieure (17) de l'élément de support (10), la surface d'extrémité et la surface inférieure (17) étant situées à un certain angle l'une par rapport à l'autre, de préférence un angle sensiblement droit.

7. Dévidoir de bobine selon l'une quelconque des revendications 2 à 4, **caractérisé en ce que** ladite rainure (30) est agencée dans l'élément de support (10) et la première surface de support et la seconde surface de support sont agencées dans la base (20).

8. Dévidoir de bobine selon la revendication 7, **caractérisé en ce que** la base (20) présente un bord latéral (40), dans lequel la première surface de support est agencée, et un bord d'extrémité (42), dans lequel la seconde surface de support est agencée, le bord latéral (40) et le bord d'extrémité (42) étant situés à un certain angle l'un par rapport à l'autre, de préférence un angle sensiblement droit.

9. Dévidoir de bobine selon l'une quelconque des revendications 1 à 8, **caractérisé en ce que** le dévidoir comporte un dispositif de retenue (34) pour empêcher la base (20) de tourner de la position opérationnelle dans la seconde direction de rotation.

10. Dévidoir de bobine selon l'une quelconque des revendications 1 à 9, **caractérisé en ce que** les supports de bobine (32) sont des broches, qui peuvent être agencées à l'intérieur du noyau de la bobine.

11. Dévidoir de bobine selon l'une quelconque des revendications 1 à 10, **caractérisé en ce que** l'élément de verrou (38) est agencé de manière à se placer de façon gravitationnelle dans le premier endroit lorsque la base (20) se trouve dans la position opérationnelle et que les supports de bobine (32) se trouvent dans une position sensiblement verticale.
